# EUROPEAN PATENT APPLICATION

(11) **EP 4 716 146 A1**
(43) Date of publication of application: **25.03.2026**
(21) Application number: 23941104.4
(22) Date of filing: 16.06.2023
(51) Int. Cl.: H04L 9/08, H04W 12/033

(54) **SECURE COMMUNICATION METHOD AND APPARATUS**

(71) Applicant: Huawei Technologies Co., Ltd., Shenzhen, Guangdong 518129 (CN)
(72) Inventor: WANG, Wenhui, Shenzhen, Guangdong 518129 (CN); SUN, Li, Shenzhen, Guangdong 518129 (CN); LIU, Peng, Shenzhen, Guangdong 518129 (CN); YANG, Lu, Shenzhen, Guangdong 518129 (CN); WU, Jianjun, Shenzhen, Guangdong 518129 (CN)
(74) Representative: Goddar, Heinz J.
(86) International application number: PCT/CN2023/100811
(87) International publication number: WO 2024/254871

(57) **Abstract**

This application provides a secure communication method and an apparatus, to synchronize random seeds between a receiver end and a transmitter end, and relates to the field of wireless communication technologies. In the method, a terminal device receives downlink control information, where the downlink control information indicates whether the k^{th} piece of data transmitted in the i^{th} HARQ process is newly transmitted. If the k^{th} piece of data is newly transmitted, a random seed is updated. An updated random seed is used for security processing on the k^{th} piece of data. Based on this solution, a network device indicates, to the terminal device by using the downlink control information, whether the scheduled k^{th} piece of data is newly transmitted. When the k^{th} piece of data is newly transmitted, the terminal device may update the random seed, thereby synchronizing the random seed with the network device. This enhances data transmission security, and makes a keyless transmission method feasible in a cellular network protocol framework.

## Description

### TECHNICAL FIELD

This application relates to the field of wireless communication technologies, and in particular, to a secure communication method and an apparatus.

### BACKGROUND

Secure transmission is the fundamental assurance for communication. Most secure transmission solutions are key-based, and include symmetric encryption and asymmetric encryption. In symmetric encryption, two parties share a key. In asymmetric encryption, one communication party transmits a public key to the other party. A transmitter uses the public key for encryption, and a receiver uses a private key for decryption. Regardless of the encryption scheme, the two communication parties need to maintain and manage the keys. Because key maintenance and management require support of complex protocols, vulnerabilities in these protocols are often exploited by adversaries. In addition, the complex protocols result in extra communication overheads and delays, making them unable to cope with the highly dynamic nature of future communication networks.

Currently, a physical layer security transmission technology, such as secure coding, secure waveform modulation, or introduction of artificial noise into channels, may implement information transmission and provide basic security. However, the security provided by the physical layer security transmission technology is limited, and non-target receivers still have a high probability of obtaining transmitted information.

### SUMMARY

This application provides a secure communication method and an apparatus, to synchronize random seeds between a receiver end and a transmitter end.

According to a first aspect, a secure communication method is provided. The method may be performed by a terminal device, or may be performed by a chip/chip system. In the method, the terminal device receives downlink control information, where the downlink control information indicates whether the k^{th} piece of data transmitted in the i^{th} hybrid automatic repeat request (hybrid automatic repeat request, HARQ) process is newly transmitted, and i identifies a HARQ process number. If the k^{th} piece of data is newly transmitted, the terminal device updates a random seed. An updated random seed is used for security processing on the k^{th} piece of data.

Based on this solution, a network device and the terminal device perform security processing on data based on a random seed, so that each bit in the data can achieve provable security strength. In addition, the network device indicates, to the terminal device by using the downlink control information, whether the scheduled k^{th} piece of data is newly transmitted. When the k^{th} piece of data is newly transmitted, the terminal device may update the random seed, to synchronize the random seed with the network device, so that data transmission security can be improved, and a keyless transmission method can be feasible in a protocol framework of a cellular network.

In a possible implementation, an identifier of the i^{th} HARQ process is associated with the i^{th} security module, and the i^{th} security module is configured to update and/or generate the random seed, and perform security processing on the k^{th} piece of data. Based on this solution, each HARQ process number is associated with a different security module. In this way, security processing may be performed on data in different HARQ processes in parallel by using associated security modules, to improve data transmission efficiency.

In a possible implementation, the terminal device obtains the updated random seed based on the (k-1)^{th} piece of data and a first random seed. The first random seed is used for security processing on the (k-1)^{th} piece of data, and the (k-1)^{th} piece of data is data that is successfully transmitted in the i^{th} HARQ process.

Based on this solution, when the k^{th} piece of data is newly transmitted, the terminal device may obtain the updated random seed based on the (k-1)^{th} piece of data and the first random seed. Because the (k-1)^{th} piece of data is data that is successfully transmitted, both the network device and the terminal device can obtain the (k-1)^{th} piece of data, so that the terminal device and the network device can synchronize the random seed.

In a possible implementation, the downlink control information includes a new data indicator (new data indicator, NDI). A toggle in the NDI indicates that the k^{th} piece of data is newly transmitted, and no toggle in the NDI indicates that the k^{th} piece of data is retransmitted.

Based on this solution, whether the NDI is toggled indicates whether the k^{th} piece of data is retransmitted or newly transmitted, so that this application can be applied to an uplink HARQ scenario and a downlink HARQ scenario. An uplink HARQ process and a downlink HARQ process are processed separately.

In a possible implementation, the terminal device receives the (k-1)^{th} piece of data transmitted in the i^{th} HARQ process. The terminal device performs inverse security processing on the (k-1)^{th} piece of data based on the first random seed. If the (k-1)^{th} piece of data is successfully decrypted, the terminal device sends response information of the (k-1)^{th} piece of data. The response information indicates that the (k-1)^{th} piece of data is successfully transmitted. The updated random seed is updated based on the first random seed.

Based on this solution, in the downlink HARQ scenario, the terminal device may perform inverse security processing on the (k-1)^{th} piece of data based on the first random seed. When the inverse processing succeeds, the terminal device may send the response information of the (k-1)^{th} piece of data to the network device, to indicate the network device to send newly transmitted data, namely, the k^{th} piece of data. If the received downlink control information indicates that the transmitted k^{th} piece of data is newly transmitted, the terminal device updates the random seed based on the first random seed and the (k-1)^{th} piece of data that is successfully transmitted, and performs inverse security processing on the k^{th} piece of data based on the updated random seed.

In a possible implementation, if the downlink control information indicates that the k^{th} piece of data is newly transmitted, security processing is performed on the k^{th} piece of data based on the updated random seed, and the k^{th} piece of security processed data is sent.

Based on the foregoing solution, in the uplink HARQ scenario, when the downlink control information indicates that the k^{th} piece of data is newly transmitted, the terminal device may perform security processing on the k^{th} piece of data based on the updated random seed, and send the k^{th} piece of security processed data to the network device.

In a possible implementation, a part or all of fields included in the downlink control information are encrypted, and the downlink control information is decrypted based on the first random seed. The updated random seed is updated based on the first random seed.

Based on this solution, the downlink control information of the i^{th} HARQ process is encrypted based on the random seed, so that security of the downlink control information can be improved.

In a possible implementation, the HARQ process number of the i^{th} HARQ process included in the downlink control information is not encrypted. Based on this solution, when the HARQ process number is not encrypted, the terminal device may obtain the HARQ process number when the downlink control information is not decrypted, to determine the HARQ process number corresponding to the downlink control information.

In a possible implementation, if a quantity of retransmissions of a transport block in the i^{th} HARQ process is greater than or equal to a preset threshold, and the k^{th} piece of data is newly transmitted, the terminal device receives an initialized random bit. The terminal device updates the random seed based on the initialized random bit. The terminal device resets the quantity of retransmissions of the transport block in the i^{th} HARQ process to a specified value, for example, 0.

Based on this solution, when the quantity of retransmissions of the transport block in the i^{th} HARQ process is large, to prevent a non-target receiver from obtaining sufficient information, the terminal device and the network device may reset the random seed based on the initialized random bit, to improve data transmission security.

In a possible implementation, the quantity of retransmissions of the transport block in the i^{th} HARQ process includes a cumulative count of retransmissions for all transport blocks corresponding to the i^{th} HARQ process. Alternatively, the quantity of retransmissions of the transport block in the i^{th} HARQ process includes a cumulative count of retransmissions for a specific transport block in the i^{th} HARQ process.

According to a second aspect, a secure communication method is provided. The method may be performed by a network device, or may be performed by a chip/chip system. In the method, the network device receives response information of the (k-1)^{th} piece of data transmitted in the i^{th} hybrid automatic repeat request HARQ process, where the response information indicates that the (k-1)^{th} piece of data is successfully transmitted. Alternatively, the network device receives the (k-1)^{th} piece of data transmitted in the i^{th} HARQ process, and successfully decodes the (k-1)^{th} piece of data. The network device updates a random seed. An updated random seed is used for security processing on the k^{th} piece of data transmitted in the i^{th} HARQ process. The network device sends downlink control information, where the downlink control information indicates that the k^{th} piece of data is newly transmitted.

In a possible implementation, an identifier of the i^{th} HARQ process is associated with the i^{th} security module, and the i^{th} security module is configured to update and/or generate the random seed, and perform security processing on the k^{th} piece of data.

In a possible implementation, the network device obtains the updated random seed based on the (k-1)^{th} piece of data and a first random seed of the i^{th} HARQ process. The first random seed is used for security processing on the (k-1)^{th} piece of data. The (k-1)^{th} piece of data is data that is successfully transmitted.

In a possible implementation, the downlink control information includes a new data indicator NDI. A toggle in the NDI indicates that the k^{th} piece of data is newly transmitted. No toggle in the NDI indicates that the k^{th} piece of data is retransmitted.

In a possible implementation, the network device performs security processing on the (k-1)^{th} piece of data in the i^{th} HARQ process based on the first random seed. The updated random seed is updated based on the first random seed. The network device sends the (k-1)^{th} piece of security processed data.

In a possible implementation, if the downlink control information indicates that the k^{th} piece of data is newly transmitted, the network device may receive the k^{th} piece of security processed data. The network device may perform, based on the updated random seed, inverse security processing on the k^{th} piece of security processed data.

In a possible implementation, a part or all of fields included in the downlink control information are encrypted, and the network device encrypts the downlink control information based on the first random seed. The updated random seed is updated based on the first random seed.

In a possible implementation, a HARQ process number of the i^{th} HARQ process included in the downlink control information is not encrypted.

In a possible implementation, if a quantity of retransmissions of a transport block in the i^{th} HARQ process is greater than or equal to a preset threshold, the network device updates the random seed based on an initialized random bit. The network device sends the initialized random bit, and resets the quantity of retransmissions of the transport block in the i^{th} HARQ process to a specified value, for example, 0.

In a possible implementation, the quantity of retransmissions of the transport block in the i^{th} HARQ process includes a cumulative count of retransmissions for all transport blocks corresponding to the i^{th} HARQ process. Alternatively, the quantity of retransmissions of the transport block in the i^{th} HARQ process includes a cumulative count of retransmissions for a specific transport block in the i^{th} HARQ process.

According to a third aspect, a communication apparatus is provided, including a processing unit and a transceiver unit.

The transceiver unit is configured to receive downlink control information, where the downlink control information indicates whether the k^{th} piece of data transmitted in the i^{th} hybrid automatic repeat request HARQ process is newly transmitted, and i identifies a HARQ process number. If the k^{th} piece of data is newly transmitted, the processing unit is configured to update a random seed. An updated random seed is used for security processing on the k^{th} piece of data.

In a possible implementation, an identifier of the i^{th} HARQ process is associated with the i^{th} security module, and the i^{th} security module is configured to update and/or generate the random seed, and perform security processing on the k^{th} piece of data.

In a possible implementation, the processing unit is specifically configured to obtain the updated random seed based on the (k-1)^{th} piece of data and a first random seed. The first random seed is used for security processing on the (k-1)^{th} piece of data, and the (k-1)^{th} piece of data is data that is successfully transmitted in the i^{th} HARQ process.

In a possible implementation, the downlink control information includes a new data indicator (new data indicator, NDI). A toggle in the NDI indicates that the k^{th} piece of data is newly transmitted, and no toggle in the NDI indicates that the k^{th} piece of data is retransmitted.

In a possible implementation, the transceiver unit is further configured to receive the (k-1)^{th} piece of data transmitted in the i^{th} HARQ process. The processing unit is further configured to perform inverse security processing on the (k-1)^{th} piece of data based on the first random seed. The updated random seed is updated based on the first random seed. The transceiver unit is further configured to send response information of the (k-1)^{th} piece of data. The response information indicates that the (k-1)^{th} piece of data is successfully transmitted.

In a possible implementation, the processing unit is further configured to: when the downlink control information indicates that the k^{th} piece of data is newly transmitted, perform security processing on the k^{th} piece of data based on the updated random seed. The transceiver unit is further configured to send the k^{th} piece of security processed data to a network device.

In a possible implementation, a part or all of fields included in the downlink control information are encrypted, and the processing unit is further configured to decrypt the downlink control information based on the first random seed. The updated random seed is updated based on the first random seed.

In a possible implementation, the HARQ process number of the i^{th} HARQ process included in the downlink control information is not encrypted.

In a possible implementation, if a quantity of retransmissions of a transport block in the i^{th} HARQ process is greater than or equal to a preset threshold, and the k^{th} piece of data is newly transmitted, the transceiver unit is further configured to receive an initialized random bit. The processing unit is specifically configured to update the random seed based on the initialized random bit. The processing unit is further configured to reset the quantity of retransmissions of the transport block in the i^{th} HARQ process to a specified value, for example, 0.

In a possible implementation, the quantity of retransmissions of the transport block in the i^{th} HARQ process includes a cumulative count of retransmissions for all transport blocks corresponding to the i^{th} HARQ process. Alternatively, the quantity of retransmissions of the transport block in the i^{th} HARQ process includes a cumulative count of retransmissions for a specific transport block in the i^{th} HARQ process.

According to a fourth aspect, a communication apparatus is provided, including a processing unit and a transceiver unit.

The transceiver unit is configured to receive response information of the (k-1)^{th} piece of data transmitted in the i^{th} hybrid automatic repeat request HARQ process, where the response information indicates that the (k-1)^{th} piece of data is successfully transmitted. Alternatively, the transceiver unit is configured to receive the (k-1)^{th} piece of data transmitted in the i^{th} HARQ process, and successfully decode the (k-1)^{th} piece of data. The processing unit is configured to update a random seed. An updated random seed is used for security processing on the k^{th} piece of data transmitted in the i^{th} HARQ process. The transceiver unit is further configured to send downlink control information, where the downlink control information indicates that the k^{th} piece of data is newly transmitted.

In a possible implementation, an identifier of the i^{th} HARQ process is associated with the i^{th} security module, and the i^{th} security module is configured to update and/or generate the random seed, and perform security processing on the k^{th} piece of data.

In a possible implementation, the processing unit is specifically configured to obtain the updated random seed based on the (k-1)^{th} piece of data and a first random seed of the i^{th} HARQ process. The first random seed is used for security processing on the (k-1)^{th} piece of data. The (k-1)^{th} piece of data is data that is successfully transmitted.

In a possible implementation, the downlink control information includes a new data indicator NDI. A toggle in the NDI indicates that the k^{th} piece of data is newly transmitted. No toggle in the NDI indicates that the k^{th} piece of data is retransmitted.

In a possible implementation, the processing unit is further configured to perform security processing on the (k-1)^{th} piece of data in the i^{th} HARQ process based on the first random seed. The updated random seed is updated based on the first random seed. The network device sends the (k-1)^{th} piece of security processed data.

In a possible implementation, if the downlink control information indicates that the k^{th} piece of data is newly transmitted, the transceiver unit is further configured to receive the k^{th} piece of security processed data. The processing unit is further configured to perform, based on the updated random seed, inverse security processing on the k^{th} piece of security processed data.

In a possible implementation, a part or all of fields included in the downlink control information are encrypted, and the processing unit is further configured to encrypt the downlink control information based on the first random seed. The updated random seed is updated based on the first random seed.

In a possible implementation, a HARQ process number of the i^{th} HARQ process included in the downlink control information is not encrypted.

In a possible implementation, if a quantity of retransmissions of a transport block in the i^{th} HARQ process is greater than or equal to a preset threshold, the processing unit is specifically configured to: update the random seed based on an initialized random bit, and reset the quantity of retransmissions of the transport block in the i^{th} HARQ process to a specified value, for example, 0. The transceiver unit is further configured to send the initialized random bit.

In a possible implementation, the quantity of retransmissions of the transport block in the i^{th} HARQ process includes a cumulative count of retransmissions for all transport blocks corresponding to the i^{th} HARQ process. Alternatively, the quantity of retransmissions of the transport block in the i^{th} HARQ process includes a cumulative count of retransmissions for a transport block in the i^{th} HARQ process.

According to a fifth aspect, a communication apparatus is provided. The communication apparatus may be the communication apparatus in any one of the possible implementations of the second aspect to the fourth aspect in the foregoing embodiments, or a chip disposed in the communication apparatus in any one of the second aspect to the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the terminal device or the network device in any one of the possible implementations of the first aspect and the second aspect.

It should be understood that the communication interface may be implemented by using an antenna, a feeder, a codec, and the like in the communication apparatus. Alternatively, if the communication apparatus is a chip disposed in the terminal device or the network device, the communication interface may be an input/output interface of the chip, for example, an input/output pin. The communication apparatus may further include a transceiver, used by the communication apparatus to communicate with another device.

According to a sixth aspect, an embodiment of this application provides a chip system. The chip system includes a processor, and may further include a memory, configured to implement the method performed by the terminal device or the network device in any one of the possible implementations of the first aspect and the second aspect. In a possible implementation, the chip system further includes a memory, configured to store program instructions and/or data. The chip system may include a chip, or may include a chip and another discrete component.

According to a seventh aspect, this application provides a computer-readable storage medium. The computer-readable storage medium stores a computer program or instructions. When the computer program or the instructions are run, the method performed by the terminal device or the network device in the foregoing aspects is implemented.

According to an eighth aspect, a computer program product is provided. The computer program product includes computer program code or instructions. When the computer program code or the instructions are run, the method performed by the terminal device or the network device in the foregoing aspects is performed.

According to a ninth aspect, a communication apparatus is provided. The communication apparatus includes units or modules that perform the methods in the foregoing aspects.

According to a tenth aspect, a chip system is provided, including a logic circuit and an input/output interface. The logic circuit is configured to perform the method performed by the terminal device or the network device. The input/output interface is configured to communicate with another apparatus.

According to an eleventh aspect, a system is provided, including at least one communication apparatus that performs any possible implementation of the first aspect and at least one communication apparatus that performs any possible implementation of the second aspect.

For beneficial effects of the second aspect to the eleventh aspect and the implementations of the second aspect to the eleventh aspect, refer to the descriptions of the beneficial effects of the method in the first aspect and the implementations of the first aspect.

### BRIEF DESCRIPTION OF DRAWINGS

FIG. 1 is a diagram of a communication system according to an embodiment of this application;
FIG. 2 is a diagram of a keyless secure transmission architecture;
FIG. 3 is a diagram of a security module;
FIG. 4A is a diagram of a submodule of a security module according to an embodiment of this application;
FIG. 4B is a diagram of another submodule of a security module according to an embodiment of this application;
FIG. 5 is a diagram of a plurality of HARQ processes;
FIG. 6 is an example flowchart of a secure communication method according to an embodiment of this application;
FIG. 7 is an example flowchart of another secure communication method according to an embodiment of this application;
FIG. 8 is an example flowchart of another secure communication method according to an embodiment of this application;
FIG. 9 is an example flowchart of another secure communication method according to an embodiment of this application;
FIG. 10A is a diagram of a relationship between a security module and a HARQ process according to an embodiment of this application;
FIG. 10B is a diagram of updating a random seed by a security module associated with a HARQ process according to an embodiment of this application;
FIG. 10C is a diagram of a DCI transmission procedure according to an embodiment of this application;
FIG. 11 is a diagram of a communication apparatus according to an embodiment of this application;
FIG. 12 is a diagram of another communication apparatus according to an embodiment of this application;
FIG. 13 is a diagram of another communication apparatus according to an embodiment of this application; and
FIG. 14 is a diagram of another communication apparatus according to an embodiment of this application.

### DESCRIPTION OF EMBODIMENTS

For ease of understanding the technical solutions provided in embodiments of this application, the following explains and describes technical terms in embodiments of this application.

A random seed, also referred to as random entropy, state information, or the like, is information used for security processing on a transport block, for example, used for encrypting the transport block or used for integrity protection on the transport block. Optionally, the random seed may be directly used for security processing on the transport block, or can be used to derive a key according to some algorithms such as a hash algorithm for security processing on the transport block.

Optionally, the random seed may be used as an input and an output of a security module. A random seed output by the security module may be a function of a random seed input by the security module and a message input by the security module. The function has many implementations, for example, an output random seed is Seedₒᵤₜ = HASH(Seedᵢₙ, Mₒᵤₜ), that is, Seedᵢ = HASH(Seedᵢ₋₁, EXT(Mᵢ₋₁, Seedᵢ₋₁)). Hash represents a hash operation, EXT represents a randomness extraction operation, Seedᵢₙ represents the random seed input by the security module, and Mₒᵤₜ represents the message input by the security module. EXT(Mᵢ₋₁, Seedᵢ₋₁) represents a randomness extraction operation on the i - 1^{th} random seed and the i - 1^{th} message.

The following describes in detail embodiments of this application with reference to the accompanying drawings of the specification.

The technical solutions in embodiments of this application may be applied to a new radio (New Radio, NR) system, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and the like. This is not limited herein.

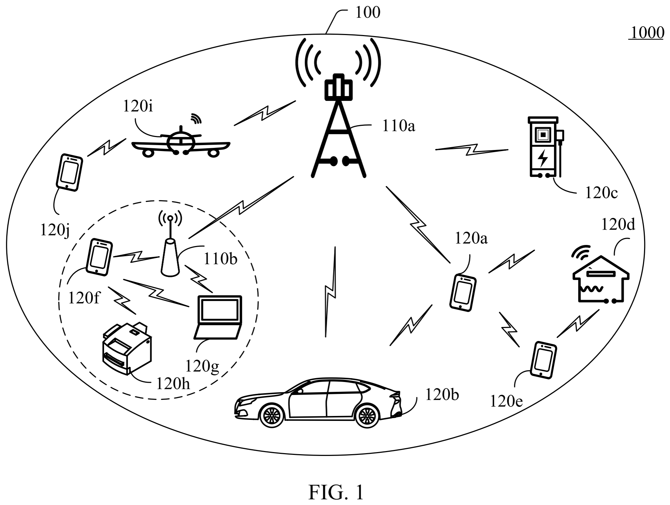

FIG. 1 is a diagram of an architecture of a communication system 1000 to which embodiments of this application are applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to the network device in a wireless manner, and the network device is connected to a core network device in a wireless or wired manner. The terminal apparatuses may be connected to each other in a wired or wireless manner, and the network devices may be connected to each other in a wired or wireless manner. FIG. 1 is merely a diagram. The communication system may further include another network device, for example, may further include a wireless relay device and a wireless backhaul device, which are not shown in FIG. 1.

The network device is a network side device with a wireless transceiver function. The network device, also referred to as a RAN device, may be an apparatus that is in a radio access network (radio access network, RAN) and that provides a wireless communication function for the terminal device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to a 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. In embodiments of this application, an example in which a base station serves as the network device is used for description.

In another possible scenario, a plurality of RAN nodes coordinate to assist the terminal in implementing radio access, and different RAN nodes respectively implement parts of functions of a base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand a meaning of the name. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. Optionally, in the secure communication method provided in embodiments of this application, operations of updating a random seed and performing security processing on data may be performed by the RU, and sending and receiving operations may be performed by the DU.

The terminal device is a user-side device with a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, smart office, a smart wearable device, smart transportation, and a smart city. The terminal apparatus may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific apparatus form that are used by the terminal apparatus are not limited in embodiments of this application. In embodiments of this application, an example in which a terminal serves as the terminal device is used for description.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a wireless air interface protocol. Certainly, 110a and 120i may alternatively communicate with each other according to an interface protocol between network devices. In this case, relative to 110a, 120i is also a network device. Therefore, the network device and the terminal device may be collectively referred to as communication apparatuses. 110a and 110b in FIG. 1 may be referred to as communication apparatuses with a function of a network device, and 120a to 120j in FIG. 1 may be referred to as communication apparatuses with a function of a terminal device.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

Secure transmission is the fundamental assurance for communication. Most secure transmission solutions are key-based. Typical examples are symmetric encryption and asymmetric encryption. In symmetric encryption, two parties share a key. In asymmetric encryption, one communication party transmits a public key to the other party. A transmitter uses the public key for encryption, and a receiver uses a private key for decryption. Regardless of the encryption scheme, the two communication parties need to maintain and manage the keys. Because key maintenance and management require support of complex protocols, vulnerabilities in these protocols are often exploited by adversaries. In addition, the complex protocols result in extra communication overheads and delays, making them unable to cope with the highly dynamic nature of future communication networks.

In current wireless communication protocols, because control signaling at a physical layer and a medium access control (media access control, MAC) layer is not encrypted, adversaries use the signaling to perform attacks such as distributed denial-of-service (distributed denial-of-service, DDoS), tampering, and interception. In the 21 types of wireless network threats disclosed by the International Telecommunication Union (international telecommunication union, ITU), 14 types wireless network threats thereof are from an access side, that is, vulnerabilities in air interface signaling. Some signaling is transmitted before key agreement, so key-based secure communication cannot be applied.

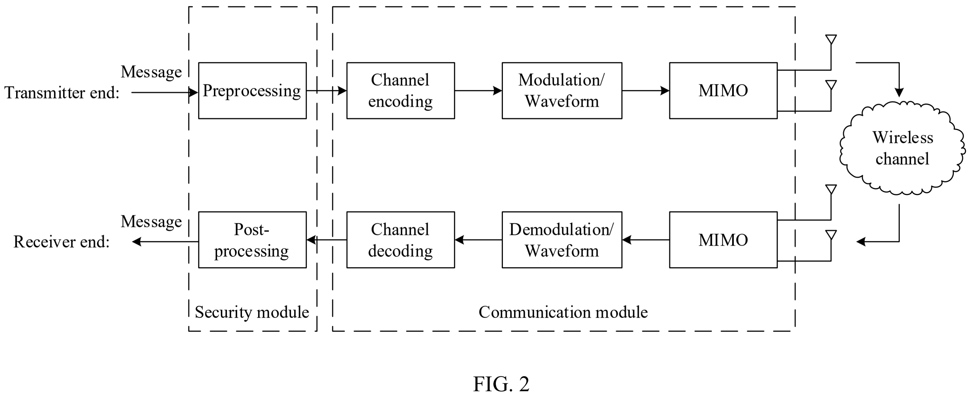

FIG. 2 shows a keyless secure transmission architecture, including a communication module and a security module. The communication module implements information transmission and provides a basic security capability by using a physical layer security transmission technology, such as secure coding, secure waveform modulation, or artificial noise. The security module is constructed by using cryptographic primitives, to achieve provable security strength.

The keyless secure transmission architecture shown in FIG. 2 integrates a cryptographic method and the physical layer security technology, and aims to implement a keyless endogenous security mechanism. In this architecture, the physical layer security technology is first used to create a very high bit error floor, for example, higher than 0.1, at a non-target receive node. That is, random entropy is introduced on a non-target receive channel. On this basis, a pre-processing module is introduced into a legitimate transmitter. The module may be a randomness extractor, and can extract and spread random entropy introduced by the physical layer security technology on the non-target receive channel, to obtain an equivalent key that is approximately evenly distributed, so that each bit in a message packet achieves provable security strength.

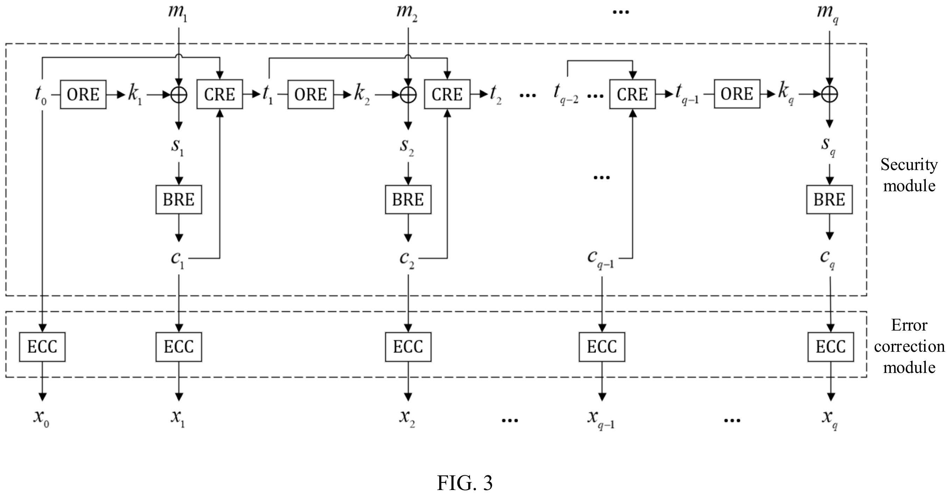

In the keyless secure transmission architecture, a core module is the security module, which corresponds to the preprocessing part in FIG. 2. An implementation structure is shown in FIG. 3. In FIG. 3, m₁, m₂, ..., and m_{q} represent to-be-transmitted source message packets, and x₁, x₂, ..., and x_{q} represent encoded packets output by a channel encoder. An error correction coding (error control coding, ECC) module may be a channel encoding module in FIG. 2. Channel encoding may use various encoding schemes widely used in a communication system, for example, low-density parity-check (low density parity check code, LDPC) encoding or polar (polar) encoding. It may be understood that the ECC module is not a component of the security module, and the ECC module is presented in FIG. 2 for integrity of structural completeness.

A randomness extraction operation is implemented by a security module shown in FIG. 3, and t₀ is an initial random seed and may be a random vector. A working principle of the security module is as follows: In a packet, a bidirectional entropy extractor (bidirectional randomness extractor, BRE) extracts and spreads a random seed introduced on a non-target receive channel, to protect all bits in the packet. That is, a random bit error introduced by the physical layer security technology is spread in the packet. Between a plurality of packets, channel noise seeds of preceding packets are accumulated by a compressive randomness extractor (compressive randomness extractor, CRE) and a one-way randomness extractor (one-way randomness extractor, ORE), to avoid a problem that some packets fail to achieve required security strength due to insufficient random seeds introduced by channels. In other words, even if a channel condition of a non-target receive channel is good in a packet, and therefore sufficient random seeds cannot be introduced in the current packet by using the physical layer security technology, a channel noise seed in a preceding packet can still be collected by the CRE and the ORE, and introduced random bit errors are aggregated and spread to the current group.

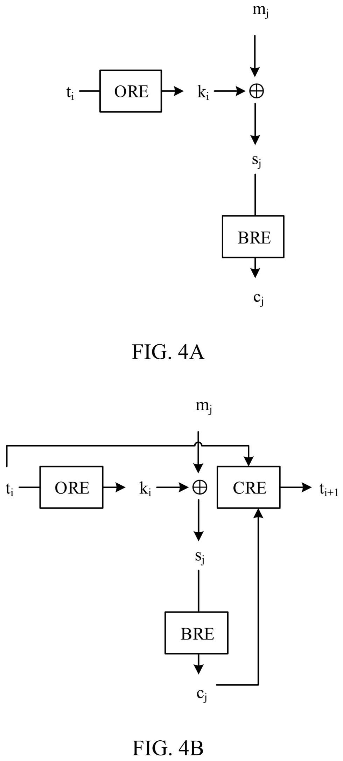

The security module shown in FIG. 3 may be split into two submodules shown in FIG. 4A and FIG. 4B. The submodule shown in FIG. 4A is configured to perform security processing. The submodule has two inputs, one input is a packet plaintext mⱼ, and the other input is a random seed tᵢ. An output of the submodule is a ciphertext cⱼ of mⱼ. The submodule shown in FIG. 4B is configured to update a random seed. The submodule has two inputs, one input is the ciphertext cⱼ output by the submodule shown in FIG. 4A, and the other input is the random seed tᵢ used for encrypting mⱼ. An output of the submodule is an updated random seed tᵢ₊₁.

In embodiments of this application, the ORE, the BRE, and the like in the security module shown in FIG. 3 may use a module that is commonly used in cryptography, for example, a random bit extractor. A randomness extractor may use three deterministic random bit generators (deterministic random bit generator, DRBG) such as a hash-deterministic random bit generator (hash-deterministic random bit generator, Hash-DRBG), a hash-based message authentication code (hash-based message authentication code, HMAC-DRBG), and a counter deterministic random bit generator (counter deterministic random bit generator, CTR_DRBG). The DRBG is a pseudo random bit generator defined in a standard. Alternatively, another conventional security algorithm is used, for example, a hash operation is directly performed on a value, to increase randomness and obtain an updated security seed.

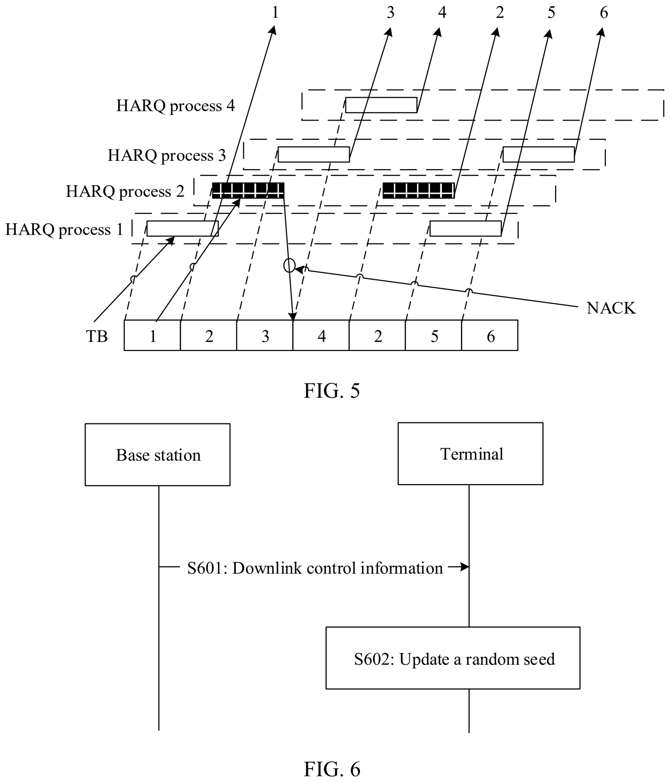

To facilitate understanding of the technical solutions provided in embodiments of this application, the following describes a diagram of a plurality of HARQ processes. A transmission time interval (transmission time interval, TTI) of a 5G cellular network may be a 0.5 ms slot (slot), and each slot may transmit one or two transport blocks (transport block, TB). If a frame structure is 8:2, each 10 ms system frame has 16 downlink TTIs. FIG. 5 is a diagram of a plurality of HARQ processes in a cellular network. It is assumed that one TB is transmitted in each TTI. It can be learned from FIG. 5 that, in a HARQ process 1 (process 1), a base station transmits a TB 1, a terminal receives the TB 1 and successfully decodes the TB 1, and a physical layer of the terminal forwards the TB 1 to a MAC layer. In a HARQ process 2 (process 2), the base station transmits a TB 2, the terminal receives the TB 2 but fails to decode the TB 2, and the terminal sends a negative acknowledgment (non-acknowledgement, NACK) to the base station. The base station receives the NACK indicating a decoding failure, and retransmits the TB 2 after three TTIs. The terminal receives and successfully decodes the retransmitted TB 2, and the physical layer of the terminal forwards the TB 2 to the MAC layer. In a HARQ process 3 (process 3), the base station transmits a TB 3, the terminal receives and successfully decodes the TB 3, and the physical layer of the terminal forwards the TB 3 to the MAC layer. In a HARQ process 4 (process 4), the base station transmits a TB 4, the terminal receives and successfully decodes the TB 4, and the physical layer of the terminal forwards the TB 4 to the MAC layer. In a HARQ process 3 (process 3), the base station transmits a TB 5, the terminal receives and successfully decodes the TB 5, and the physical layer of the terminal forwards the TB 5 to the MAC layer.

In the foregoing plurality of HARQ processes, to improve data transmission security, a keyless secure transmission method shown in FIG. 2 and FIG. 3 may be introduced. In embodiments of this application, a solution is designed to accumulate and spread random seeds between a plurality of consecutive TBs or code block groups (code block group, CBG). The TB and the CBG are dedicated names in the LTE or NR system, and may be considered as message blocks in a broad sense. Names of the message blocks are not limited in this application. However, it can be learned from FIG. 3 that, synchronizing, by a receiver end and a transmitter end, random seeds used for encryption and decryption is crucial for accurate data transmission. Therefore, how to synchronize random seeds between the receiver end and the transmitter end in a plurality of HARQ processes becomes a technical problem that needs to be resolved.

In view of this, embodiments of this application provide a secure communication method. In the method, a terminal may receive downlink control information from a base station. The downlink control information may indicate whether the k^{th} piece of data transmitted in the i^{th} HARQ process is newly transmitted. If the downlink control information indicates that the k^{th} piece of data is newly transmitted, the terminal may update a random seed. Similarly, if the downlink control information indicates that the k^{th} piece of data is newly transmitted, the base station may also update a random seed. An updated random seed may be used for security processing on the k^{th} piece of data. It should be understood that i identifies a HARQ process number of the HARQ process. Based on this solution, the base station indicates, to the terminal by using the downlink control information, whether the scheduled k^{th} piece of data is newly transmitted. When the k^{th} piece of data is newly transmitted, the terminal and the base station may synchronously update the random seeds, so that data transmission security can be improved, and a keyless transmission method can be feasible in a protocol framework of a cellular network.

For ease of understanding the technical solutions provided in embodiments of this application, in the following, a random seed used for security processing on data transmitted in the i^{th} HARQ process may be referred to as a random seed t[i,data]. For example, t[i,k] is used for security processing on the k^{th} piece of data transmitted in the i^{th} HARQ process, and t[i,k-1] is used for security processing on the (k-1)^{th} piece of data transmitted in the i^{th} HARQ process. It should be noted that the random seed t[i,data] is merely an example for ease of understanding the technical solution, and does not limit a specific representation of the random seed.

In addition, it should be noted that the k^{th} piece of data may be understood as the k^{th} piece of data transmitted in the i^{th} HARQ process, or may be understood as data transmitted at a moment k. The (k+1)^{th} data and the k^{th} piece of data are different data. For example, the k^{th} piece of data is transmitted in the i^{th} HARQ process, but the k^{th} piece of data needs to be retransmitted due to a decoding failure. In this case, although the retransmitted data may be the (k+1)^{th} piece of data in terms of sequence, or may be data transmitted at a moment k+1, the retransmitted data is also referred to as the k^{th} piece of data.

FIG. 6 is an example flowchart of a secure communication method according to an embodiment of this application. The method may include the following operations.

S601: A base station sends downlink control information.

Correspondingly, a terminal receives the downlink control information.

The downlink control information may indicate whether the k^{th} piece of data transmitted in the i^{th} HARQ process is newly transmitted. In a possible case, the downlink control information may include an identifier of the i^{th} HARQ process, for example, a HARQ process number (HARQ process number) of the i^{th} HARQ process, for example, i. The downlink control information may indicate whether the k^{th} piece of data transmitted in the HARQ process corresponding to the HARQ process number is newly transmitted. It may be understood that a start number of the HARQ process number may start from 0, or may start from 1. This is not specifically limited in this application.

For example, the downlink control information may be used to schedule a physical downlink shared channel (physical downlink shared control, PDSCH), and the PDSCH may be used to transmit the k^{th} piece of data in the i^{th} HARQ process. The downlink control information may indicate whether the k^{th} piece of data is newly transmitted. For another example, the downlink control information may be used to schedule a physical uplink shared channel (physical uplink shared control, PUSCH), and the PUSCH may be used to transmit the k^{th} piece of data in the i^{th} HARQ process. The downlink control information may indicate whether the k^{th} piece of data is newly transmitted.

In a possible case, a new field may be added to the downlink control information to indicate whether the k^{th} piece of data is newly transmitted. For example, 1-bit information may be added to the downlink control information. When a value of the 1-bit information is "0", it indicates that the k^{th} piece of data is not newly transmitted, and when a value of the 1-bit information is "1", it indicates that the k^{th} piece of data is newly transmitted. Conversely, when a value of the 1-bit information is "1", it indicates that the k^{th} piece of data is not newly transmitted, and when a value of the 1-bit information is "0", it indicates that the k^{th} piece of data is newly transmitted.

In another possible case, an NDI included in the downlink control information may determine whether the k^{th} piece of data is newly transmitted. For example, a toggle in the NDI indicates that the k^{th} piece of data is newly transmitted, and no toggle in the NDI indicates that the k^{th} piece of data is retransmitted. For example, it is assumed that in a new HARQ process 0, an initial value of an NDI is 0. When transmitting a TB 0 to the terminal in the HARQ process 0, the base station sends, to the terminal, the downlink control information that carries a value 0 of the NDI. If the terminal sends a NACK to the base station, the base station needs to retransmit the TB 0. During retransmission, the value of the NDI sent by the base station to the terminal remains unchanged, that is, the value of the NDI is still 0. The terminal may determine that the NDI is not toggled. That is, the value of the NDI is still 0. In this case, the terminal considers that this transmission is retransmission. If the terminal sends an ACK to the base station, it indicates that the TB 0 is successfully transmitted. The base station may continue to transmit a TB 1 to the receiver, and the base station may toggle the value of the NDI to 1 and send the NDI to the terminal. The terminal may determine that NDI is toggled. That is, the value of the NDI is 1. In this case, the terminal considers that this transmission is initial transmission. That is, the TB 1 is newly transmitted.

S602: The terminal updates a random seed.

In S601, if the downlink control information indicates that the k^{th} piece of data is not newly transmitted, the terminal does not perform S602. That is, the terminal may not update the random seed. The terminal may still transmit data to the base station based on the non-updated random seed.

In S601, if the downlink control information indicates that the k^{th} piece of data is newly transmitted, the terminal may update the random seed. For example, the terminal may obtain a random seed t[i,k] based on a random seed t[i,k-1] and the (k-1)^{th} piece of data. It may be understood that the (k-1)^{th} piece of data may be data that is successfully transmitted in the first HARQ process. Optionally, the terminal may input the random seed t[i,k-1] and the (k-1)^{th} piece of data into the submodule shown in FIG. 4B for randomness extraction processing, to obtain the random seed t[i,k].

Similarly, because the downlink control information indicates that the k^{th} piece of data is newly transmitted, the base station may also update a random seed. The terminal and the base station may perform security processing on the k^{th} piece of data based on the updated random seed t[i,k].

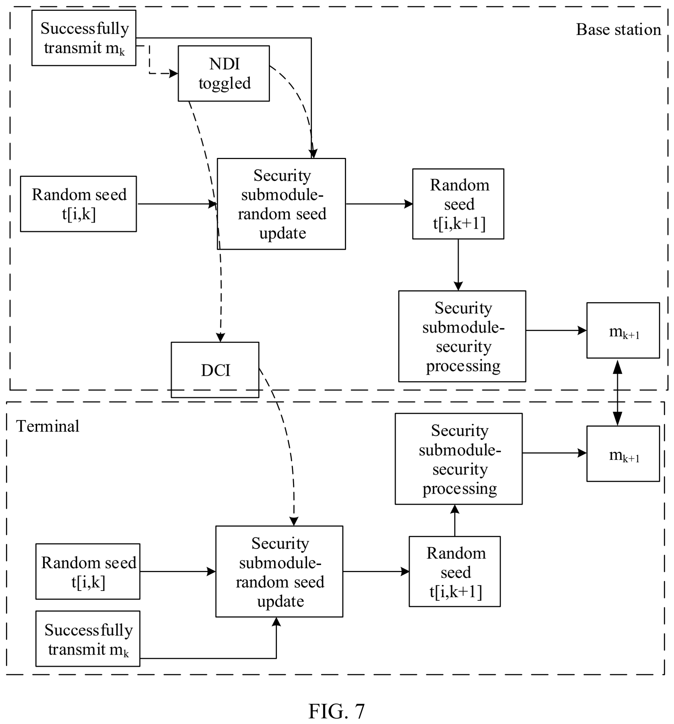

Refer to FIG. 7. The terminal and the base station successfully transmit the k^{th} piece of data mₖ in the i^{th} HARQ process. Security processing on mₖ may be performed based on the random seed t[i,k]. Because the terminal and the base station successfully transmit mₖ, the base station may toggle the NDI included in the downlink control information, and send the downlink control information to the terminal. The downlink control information is used to schedule the (k+1)^{th} piece of data mₖ₊₁ in the i^{th} HARQ process. In addition, the base station may also update the random seed t[i,k], to obtain an updated random seed t[i,k+1]. After receiving the downlink control information, the terminal may determine that the NDI is toggled, and the terminal may determine that mₖ₊₁ is newly transmitted. Therefore, the terminal may update the random seed, to obtain the random seed t[i,k+1]. The base station and the terminal may perform security processing on mₖ₊₁ by using the random seed t[i,k+1], and transmit mₖ₊₁.

Based on the foregoing solution, the downlink control information may indicate whether the k^{th} piece of data is newly transmitted. When the k^{th} piece of data is newly transmitted, the terminal and the base station may update the random seeds. When the k^{th} piece of data is not newly transmitted, the terminal and the base station may perform data transmission by using the random seed before update, so that the terminal and the base station can synchronize the random seeds, to improve data transmission security.

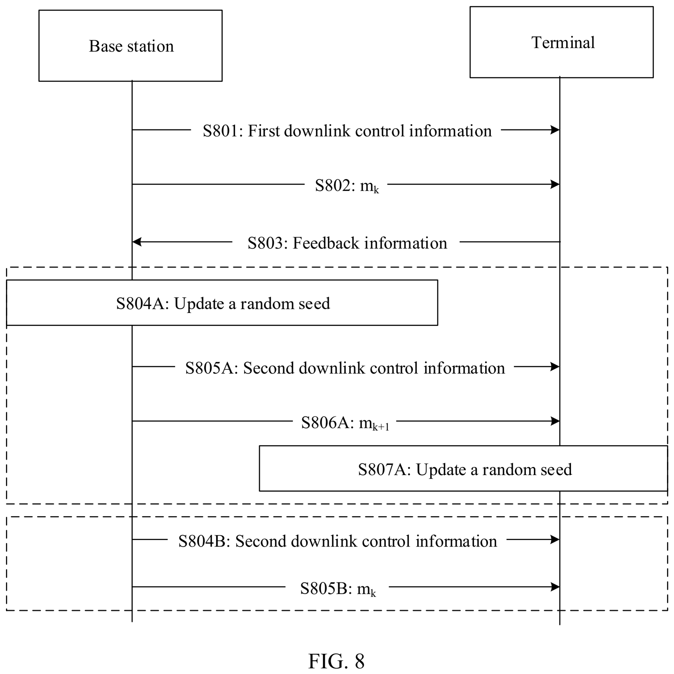

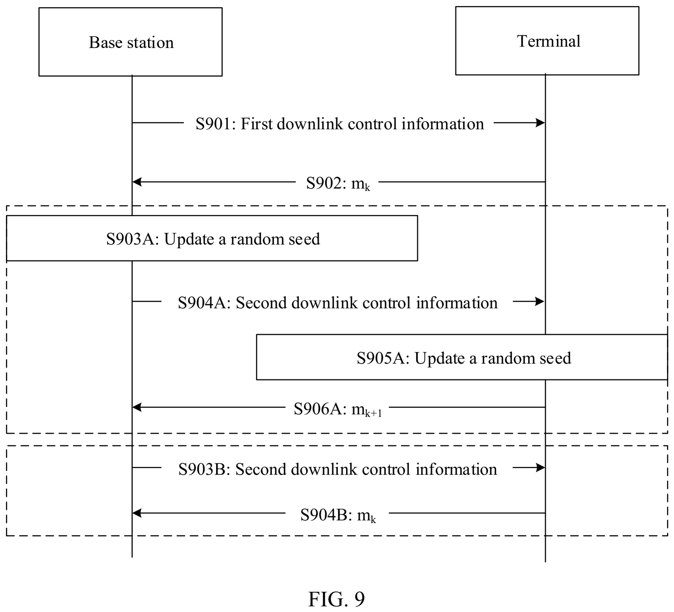

Because the HARQ process may be classified into an uplink HARQ process and a downlink HARQ process, the following separately describes, by using FIG. 8 and FIG. 9, a random seed updating method in the uplink HARQ process and a random seed updating method in the downlink HARQ process.

FIG. 8 is an example flowchart of the random seed updating method in the downlink HARQ process according to an embodiment of this application. The method may include the following operations.

S801: A base station sends first downlink control information to a terminal.

Correspondingly, the terminal receives the first downlink control information from the base station.

For example, the base station and the terminal may schedule the k^{th} piece of data mₖ shown in FIG. 7 by using the first downlink control information. The base station may send the first downlink control information through a physical downlink control channel (physical downlink control channel, PDCCH). The first downlink control information may include a HARQ process number. For example, the HARQ process number is 0. The first downlink control information may further include an NDI. A value of the NDI is an initial value, for example, NDI=0. It may be understood that the initial value of the NDI may also be 1. This is not specifically limited in this application.

The first downlink control information in S801 may be used to schedule a first PDSCH. For example, the first downlink control information may include information such as a time-frequency domain resource of the first PDSCH. It may be understood that the first downlink control information may further include other information, and examples are not described herein one by one.

S802: The base station sends mₖ to the terminal.

Correspondingly, the terminal receives mₖ from the base station.

For example, the base station may send mₖ through the first PDSCH scheduled by using the first downlink control information. Correspondingly, after receiving the first downlink control information, the terminal may determine the first PDSCH scheduled by using the first downlink control information, for example, determine time-frequency domain resource information of the first PDSCH. Therefore, the terminal may receive mₖ on a corresponding time-frequency domain resource.

In a possible implementation, the base station may perform security processing on mₖ based on a random seed t[0,k]. For example, the base station may input the random seed t[0,k] and mₖ into the submodule shown in FIG. 4A for encryption, to obtain a ciphertext of mₖ. The base station may send the ciphertext of mₖ to the terminal.

S803: The terminal sends feedback information to the base station.

Correspondingly, the base station receives the feedback information from the terminal.

For example, the terminal may decode mₖ, and perform cyclic redundancy check (cyclic redundancy check, CRC) on a decoding result. If the check succeeds, it is considered that the terminal successfully decodes mₖ. If the check fails, it is considered that the terminal fails to decode mₖ.

If the terminal successfully decodes mₖ, in S803, the terminal may send an acknowledgment (acknowledgement, ACK) to the base station, to indicate to the base station that a TB 0 is successfully decoded. If the terminal fails to decode mₖ, in S803, the terminal may send a negative acknowledgment (non-acknowledgement, NACK) to the base station, to indicate to the base station that mₖ fails to be decoded.

In a possible implementation, the terminal may perform inverse security processing on mₖ based on the random seed t[0,k]. For example, the terminal may input the random seeds t[0,k] and mₖ into a submodule that performs an inverse operation of the operation shown in FIG. 4A, that is, a decryption submodule, to decrypt mₖ based on the random seed t[0,k].

In a possible case, if the feedback information in S803 is an ACK, that is, the terminal and the base station successfully transmit mₖ, S804A to S807A may be performed.

S804A: The base station updates the random seed.

As shown in FIG. 7, the base station and the terminal successfully transmit mₖ. Therefore, the base station and the terminal may update the random seed. For example, the base station may obtain an updated random seed t[0,k+1] based on the random seed t[0,k] and mₖ. For example, the base station may input the random seed t[0,k] and mₖ into the submodule shown in FIG. 4B, to obtain the updated random seed t[0,k+1].

S805A: The base station sends second downlink control information to the terminal.

Correspondingly, the terminal receives the second downlink control information from the base station.

For example, the base station and the terminal may schedule the (k+1)^{th} piece of data mₖ₊₁ shown in FIG. 7 by using the second downlink control information. The base station may send the second downlink control information through a PDCCH. The second downlink control information may include a HARQ process number. For example, the HARQ process number is 1. The second downlink control information may further include an NDI, and NDI=1. That is, the NDI is toggled.

The second downlink control information in S804A may be used to schedule a second PDSCH. For implementation, refer to S801. Details are not described herein again.

It may be understood that S804A may be performed before S805A, or may be performed after S805A, or may be performed simultaneously with S805A. This is not specifically limited in this application.

S806A: The base station sends mₖ₊₁ to the terminal.

Correspondingly, the terminal receives mₖ₊₁ from the base station.

Because the feedback information in S803 is an ACK, that is, NDI=1 in the second downlink control information in S804A, the base station may perform security processing on mₖ₊₁ based on the random seed t[0,k+1]. For example, the base station may input the random seed t[0,k+1] and mₖ₊₁ into the submodule shown in FIG. 4A for encryption, to obtain a ciphertext of mₖ₊₁. The base station may send the ciphertext of mₖ₊₁ to the terminal.

S807A: The terminal updates the random seed t[0,k+1].

The terminal may determine that the NDI included in the second downlink control information in S805A is toggled. That is, mₖ₊₁ is newly transmitted. Therefore, the terminal may update the random seed t[0,k+1]. For example, the terminal may obtain the updated random seed t[0,k+1] based on the random seed t[0,k] and mₖ. For example, the terminal may input the random seed t[0,k] and mₖ into the submodule shown in FIG. 4B, to obtain the updated random seed t[0,k+1]. The terminal decodes mₖ₊₁, and performs CRC on a decoding result. If the check succeeds, the terminal successfully decodes mₖ₊₁. As shown in FIG. 7, the terminal may perform inverse security processing on mₖ₊₁ based on the random seed t[0,k+1]. For example, the terminal may input the random seed t[0,k+1] and mₖ₊₁ into a submodule that performs an inverse operation of the operation shown in FIG. 4A, that is, a decryption submodule, to decrypt mₖ₊₁ based on the random seed t[0,k+1].

If the terminal successfully decodes mₖ₊₁, S803 and S804A to S807A may be repeatedly performed. In this case, mₖ₊₁ may be considered as mₖ. If the terminal fails to decode mₖ₊₁, S803, S804B, and S805B may be repeatedly performed.

It may be understood that S806A may be performed before S807A, or may be performed after S807A, or may be performed simultaneously with S807A. This is not specifically limited in this application.

In another possible case, if the feedback information in S803 is a NACK, that is, the terminal and the base station fail to transmit mₖ, S804B and S805B may be performed.

S804B: The base station sends second downlink control information to the terminal.

Correspondingly, the terminal receives the second downlink control information from the base station.

For example, the base station and the terminal may schedule retransmission of mₖ by using the second downlink control information. The base station may send the second downlink control information through a PDCCH. The second downlink control information may include a HARQ process number. For example, the HARQ process number is 1. The second downlink control information may further include an NDI, and NDI=0. That is, the NDI is not toggled. Because the feedback information in S803 is a NACK, that is, the NDI is not toggled, the base station does not update the random seed t[0,k].

S805B: The base station sends mₖ to the terminal.

Correspondingly, the terminal receives mₖ from the base station.

Because the terminal fails to decode the TB 0, the base station may retransmit mₖ. The base station may perform security processing on mₖ based on the random seed t[0,k]. For implementation, refer to S802. Details are not described herein again. The terminal may determine that the NDI included in the second downlink control information in S805B is not toggled. That is, mₖ is retransmitted. Therefore, the terminal may not update the random seed t[0,k].

The terminal may decode mₖ, and perform CRC on a decoding result. If the check succeeds, the terminal successfully decodes mₖ. The terminal may perform inverse security processing on mₖ based on the random seed t[0,k]. For example, the terminal may input the random seed t[0,k] and mₖ into a submodule that performs an inverse operation of the operation shown in FIG. 4A, that is, a decryption submodule, to decrypt mₖ based on the random seed t[0,k].

If the terminal successfully decodes mₖ, S803 and S804A to S807A may be repeatedly performed. If the terminal fails to decode mₖ, S803, S804B, and S805B may be repeatedly performed.

In this embodiment of this application, the random seed updating method in the downlink HARQ process is described by using FIG. 8. The following describes the random seed updating method in the uplink HARQ process by using FIG. 9. FIG. 9 is an example flowchart of the random seed updating method in the uplink HARQ process according to an embodiment of this application. The method may include the following operations.

S901: A base station sends first downlink control information to a terminal.

Correspondingly, the terminal receives the first downlink control information from the base station.

For example, the base station and the terminal may schedule the k^{th} piece of data mₖ shown in FIG. 7 by using the first downlink control information. The base station may send the first downlink control information through a PDCCH. The first downlink control information may include a HARQ process number. For example, the HARQ process number is 1. The first downlink control information may further include an NDI. A value of the NDI is an initial value, for example, NDI=0. It may be understood that the initial value of the NDI may also be 1. This is not specifically limited in this application.

The first downlink control information in S901 may be used to schedule a first PUSCH. For example, the first downlink control information may include information such as a time-frequency domain resource of the first PUSCH. It may be understood that the first downlink control information may further include other information, and examples are not described herein one by one.

S902: The terminal sends mₖ to the base station.

Correspondingly, the base station receives mₖ from the terminal.

For example, the terminal may send mₖ through the first PUSCH scheduled by using the first downlink control information. In a possible implementation, the terminal may perform security processing on mₖ based on a random seed t[1,k]. For example, the terminal may input t[1,k] and mₖ into the submodule shown in FIG. 4A for encryption, to obtain a ciphertext of mₖ. The terminal may send the ciphertext of mₖ.

After receiving mₖ, the base station may decode mₖ, and perform CRC on a decoding result. If the check succeeds, it is considered that the base station successfully decodes mₖ. If the check fails, it is considered that the base station fails to decode mₖ. If the base station successfully decodes mₖ, the base station may perform inverse security processing on mₖ based on the random seed t[1,k]. For example, the base station may input the random seed t[1,k] and mₖ into a submodule that performs an inverse operation of the operation shown in FIG. 4A, that is, a decryption submodule, to decrypt mₖ based on the random seed t[1,k].

In a possible case, if the base station successfully decodes mₖ, that is, the terminal and the base station successfully transmit mₖ, S903A to S906A may be performed.

S903A: The base station updates the random seed.

As shown in FIG. 7, the base station and the terminal successfully transmit mₖ. Therefore, the base station and the terminal may update the random seed. The base station may obtain an updated random seed t[1,k+1] based on the random seed t[1,k] and mₖ. For example, the base station may input the random seed t[1,k] and mₖ into the submodule shown in FIG. 4B, to obtain the updated random seed t[1,k+1].

S904A: The base station sends second downlink control information to the terminal.

Correspondingly, the terminal receives the second downlink control information from the base station.

For example, the base station and the terminal may schedule the (k+1)^{th} piece of data mₖ₊₁ shown in FIG. 7 by using the second downlink control information. The base station may send the second downlink control information through a PDCCH. The second downlink control information may include a HARQ process number. For example, the HARQ process number is 1. The second downlink control information may further include an NDI, and NDI=1. That is, the NDI is toggled.

The second downlink control information in S904A may be used to schedule a second PUSCH. For implementation, refer to S901. Details are not described herein again.

It may be understood that S903A may be performed before S904A, or may be performed after S904A, or may be performed simultaneously with S904A. This is not specifically limited in this application.

S905A: The terminal updates the random seed t[1,k+1].

The terminal may determine that the NDI included in the second downlink control information in S904A is toggled. Therefore, the terminal may update the random seed t[1,k+1]. For example, the terminal may obtain the updated random seed t[1,k+1] based on the random seed t[1,k] and mₖ. For example, the terminal may input the random seed t[1,k] and mₖ into the submodule shown in FIG. 4B, to obtain the updated random seed t[1,k+1].

S906A: The terminal sends mₖ₊₁ to the base station.

Correspondingly, the base station receives mₖ₊₁ from the terminal.

For example, the terminal may send mₖ₊₁ through the second PUSCH scheduled by using the second downlink control information. In a possible implementation, the terminal may perform security processing on mₖ₊₁ based on the random seed t[1,k+1]. For example, the terminal may input t[1,k+1] and mₖ₊₁ into the submodule shown in FIG. 4A for encryption, to obtain a ciphertext of mₖ₊₁. The terminal may send the ciphertext of mₖ₊₁. If the base station successfully decodes mₖ₊₁, S903A to S906A may be repeatedly performed. In this case, mₖ₊₁ may be considered as mₖ.

In a possible case, if the base station fails to decode mₖ, that is, the terminal and the base station fail to transmit mₖ, S903B and S904B may be performed.

S903B: The base station sends second downlink control information to the terminal.

Correspondingly, the terminal receives the second downlink control information from the base station.

For example, the base station and the terminal may schedule retransmission of mₖ by using the second downlink control information. The base station may send the second downlink control information through a PDCCH. The second downlink control information may include a HARQ process number. For example, the HARQ process number is 1. The second downlink control information may further include an NDI, and NDI=0. That is, the NDI is not toggled. Because the NDI is not toggled, the base station does not update the random seed t[1,k].

S904B: The terminal sends mₖ to the base station.

Correspondingly, the base station receives mₖ from the terminal.

Because the base station fails to decode the TB 0, the terminal may retransmit mₖ. The terminal may perform security processing on mₖ based on the random seed t[1,k]. For implementation, refer to S902. Details are not described herein again. The terminal may determine that the NDI included in the second downlink control information in S904B is not toggled. Therefore, the terminal may update not the random seed.

In a possible implementation, the terminal may perform security processing on mₖ based on the random seed t[1,k]. For example, the terminal may input t[1,k] and mₖ into the submodule shown in FIG. 4A for encryption, to obtain a ciphertext of mₖ. The terminal may send the ciphertext of mₖ. If the terminal successfully decodes mₖ, S903A to S906Amay be repeatedly performed. If the terminal fails to decode mₖ, S903B and S904B may be repeatedly performed.

Based on the foregoing solution, random seeds on both sides of the base station and the terminal are updated based on a transport block that is successfully decoded by a legitimate receiver. From a perspective of a non-target receiver, an error may be spread in a plurality of pieces of data. Because an output random seed is related to processed data, once one piece of data is incorrect, subsequent data is affected. If the target receiver always receives correct data, the random seeds on both sides are always updated. If the target receiver fails to receive mₖ, mₖ is retransmitted in a HARQ process. In this case, the random seeds remain unchanged. According to this method, after passing through an extractor, subsequent data is related to preceding data. In this way, for an attacker, if a piece of data cannot be correctly received, data following the data cannot be correctly received, either. Therefore, security is improved. For a legitimate link, the random seeds on both sides are updated synchronously only when it is confirmed that the legitimate receiver correctly receives the data. Therefore, the error is not spread, and communication performance is not affected.

In a possible implementation, if the downlink control information indicates that data such as the k^{th} piece of data transmitted in the i^{th} HARQ process is not newly transmitted, that is, the k^{th} piece of data is retransmitted, the terminal and the base station do not update the random seed t[i,k+1]. The terminal and the base station may perform security processing and inverse security processing on the k^{th} piece of data based on the random seed t[i,k].

If the downlink control information indicates that the k^{th} piece of data transmitted in the i^{th} HARQ process is newly transmitted, the terminal and the base station may update the random seed t[i,k]. For example, if the (k-1)^{th} piece of data is formed by a data packet 1 at the MAC layer and the k^{th} piece of data is formed by a data packet 2 at the MAC layer, the (k-1)^{th} piece of data and the k^{th} piece of data are different data. That is, the k^{th} piece of data is newly transmitted. The terminal and the base station may update the random seed t[i,k], and perform security processing and inverse security processing on the k^{th} piece of data based on the random seed t[i,k].

In another possible implementation, if a quantity of retransmissions of a transport block in the i^{th} HARQ process is large, an attacker obtains sufficient information. This is conducive to the attacker deciphering original information. Therefore, if the quantity of retransmissions of the transport block in the i^{th} HARQ process is greater than or equal to a preset threshold, the base station may update the random seed by using an initialized random bit, and send the initialized random seed to the terminal. The base station may reset the quantity of transmissions of the transport block in the i^{th} HARQ process to a specified value, for example, reset to 0. The terminal may also update the random seed based on the initialized random bit. The terminal may also reset the quantity of transmissions of the transport block in the i^{th} HARQ process to a specified value, for example, reset to 0. It should be understood that the transport block may be understood as the foregoing data.

It should be noted that the quantity of retransmissions of the transport block in the i^{th} HARQ process may be a cumulative count of retransmissions for all transport blocks corresponding to the i^{th} HARQ process. For example, in the i^{th} HARQ process, data 1 is transmitted once, data 2 is transmitted twice, and data 3 is transmitted twice. The quantity of retransmissions of the transport block in the i^{th} HARQ process may be two, that is, the quantity of retransmissions of the data 2 plus the quantity of retransmissions of the data 3. Alternatively, the quantity of retransmissions of the transport block in the i^{th} HARQ process may be a cumulative count of retransmissions for a transport block corresponding to the i^{th} HARQ process. For example, in the i^{th} HARQ process, data 1 is transmitted once, and data 2 is transmitted twice. In this case, the quantity of retransmissions of the transport block in the i^{th} HARQ process may be a cumulative count of retransmissions for the data 2, that is, one.

It may be understood that, if the quantity of retransmissions of the transport block in the i^{th} HARQ process reaches the preset threshold, the base station and the terminal continue to transmit next piece of newly transmitted data. In this case, the NDI in the downlink control information is also toggled. Toggling in this case is toggling when the quantity of retransmissions reaches the preset threshold or a maximum quantity of retransmissions. For example, when the base station and the terminal transmit the (k-1)^{th} piece of data, because the (k-1)^{th} piece of data is retransmitted for a plurality of times, and a quantity of retransmissions of a transport block in the i^{th} HARQ process reaches the preset threshold, the base station and the terminal may transmit the k^{th} piece of data.

In this case, the base station may count the quantity of retransmissions of the transport block in the i^{th} HARQ process. For example, the base station may locally maintain the quantity of retransmissions of the transport block in the i^{th} HARQ process, for example, may maintain a quantity of retransmissions of a transport block in the i^{th} HARQ process, or maintain a quantity of retransmissions of all transport blocks in the i^{th} HARQ process. When the base station determines that the quantity of retransmissions of the transport block in the i^{th} HARQ process is greater than or equal to the preset threshold, the base station updates the random seed t[i,k] based on the initialized random bit, and performs security processing or inverse security processing on the k^{th} piece of data based on the random seed t[i,k]. The base station may send the initialized random bit to the terminal, and reset the quantity of retransmissions of the transport block in the i^{th} HARQ process to a specified value, for example, 0.

For an implementation in which the terminal may count the quantity of retransmissions of the transport block in the i^{th} HARQ process, refer to an implementation in which the base station counts the quantity of retransmissions of the transport block in the i^{th} HARQ process. Details are not described herein again. When the terminal determines that the quantity of retransmissions of the transport block in the i^{th} HARQ process is greater than or equal to the preset threshold, the terminal may update the random seed t[i,k] based on the initialized random bit, and performs security processing or inverse security processing on the k^{th} piece of data based on the random seed t[i,k].

Optionally, if the quantity of retransmissions of the transport block in the i^{th} HARQ process is greater than or equal to the preset threshold, the base station and the terminal may not update the random seed, that is, perform security processing and inverse security processing on the k^{th} piece of data based on the random seed t[i,k-1]. A downlink HARQ is used as an example. After determining that the (k-1)^{th} piece of data is retransmitted twice, the base station may determine that the quantity of retransmissions of the transport block in the i^{th} HARQ process reaches the preset threshold. In this case, the base station may abandon retransmission of the (k-1)^{th} piece of data, and send downlink control information to the terminal. An NDI in the downlink control information is toggled, and indicates the k^{th} piece of data in the i^{th} HARQ process. Because the base station may determine that the NDI is toggled in this case because the quantity of retransmissions of the transport block in the i^{th} HARQ process reaches the preset threshold, the base station does not update the random seed, and performs security processing on the k^{th} piece of data based on the random seed t[i,k-1].

It may be understood that, for an implementation in which the base station and the terminal may count the quantity of retransmissions of the transport block in the i^{th} HARQ process, refer to the foregoing implementation in which the terminal counts the quantity of retransmissions of the transport block in the i^{th} HARQ process. Details are not described herein again. When the quantity of retransmissions of the transport block in the i^{th} HARQ process of the terminal is greater than or equal to the preset threshold, although the downlink control information indicates that the k^{th} piece of data is newly transmitted, the base station and the terminal may not update the random seed, but perform security processing and inverse security processing on the k^{th} piece of data based on the random seed t[i,k-1].

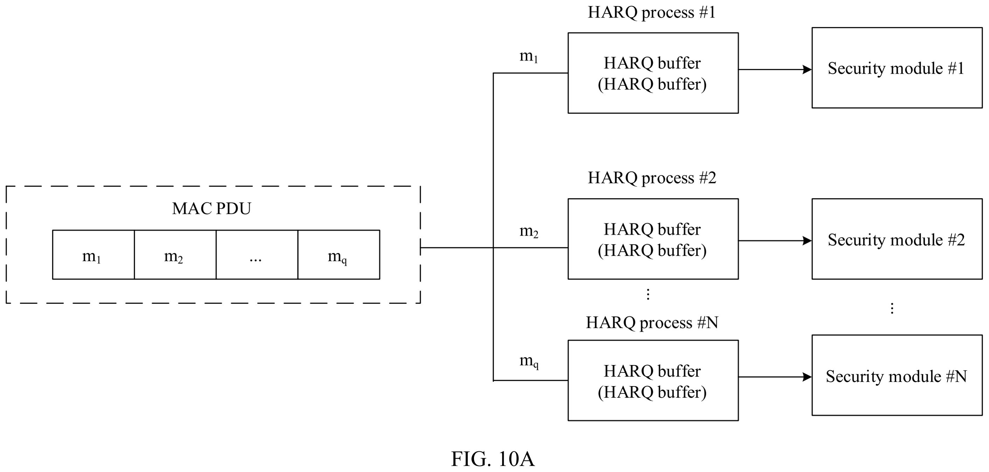

In embodiments of this application, one HARQ process is used as an example for description in FIG. 6 to FIG. 9. The secure communication method provided in embodiments of this application may also be used for a plurality of HARQ processes. In a possible case, in a scenario of a plurality of HARQ processes, each HARQ process may be associated with one security module. For example, a process number of each HARQ process may be associated with one security module. Refer to FIG. 10A. A HARQ process #1 may be associated with a security module #1, a HARQ process #2 may be associated with a security module #2, and a HARQ process #N may be associated with a security module #N.

As shown in FIG. 10A, a terminal wants to send data, for example, a MAC PDU, and the MAC PDU is divided into a plurality of packets: m₁, m₂, ..., and m_{q}. The terminal may send each packet to a HARQ buffer associated with each HARQ process. A security module may update a random seed used by an associated HARQ process, and perform security processing on data transmitted in the associated HARQ process.

For example, the terminal receives downlink control information, and the downlink control information indicates that m₁ transmitted in the HARQ process #1 is newly transmitted. In this case, the terminal may update a random seed in the security module #1. The terminal sends m₁ to a HARQ buffer associated with the HARQ process #1, performs security processing on m₁ by using the security module #1, and then sends m₁ to a base station.

It may be understood that, when a random seed is updated, an input of a security module is obtained from a HARQ buffer (buffer) of a HARQ process. For example, when updating a random seed t[i,k], the terminal or the base station may obtain, from a HARQ buffer associated with the i^{th} HARQ process, the (k-1)^{th} piece of data that is successfully transmitted, and input the (k-1)^{th} piece of data into a security module. Optionally, a random seed t[i,k-1] used as an input may be stored in the HARQ buffer associated with the i^{th} HARQ process, or may be stored in a HARQ entity of the i^{th} HARQ process. For example, after m₁ is successfully transmitted, the terminal may obtain m₁ from the HARQ buffer associated with the HARQ process #1, and update a random seed based on a random seed t[#1,m₁] and m₁, to obtain an updated random seed t[#1, mⱼ], where mⱼ is a packet transmitted in the HARQ process #1 in the packets of the MAC PDU.

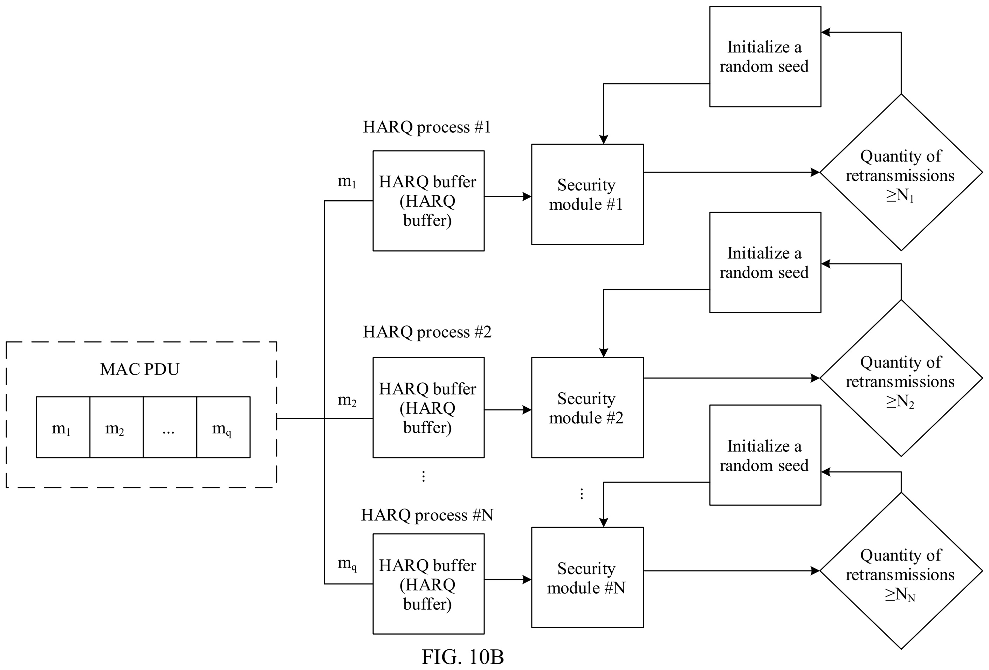

In a possible implementation, when each HARQ process may be associated with one security module, if a quantity of retransmissions of a transport block in a HARQ process is greater than or equal to a preset threshold, a random seed of the HARQ process may be updated based on an initialized random seed, as shown in FIG. 10B. It may be understood that, in each HARQ process, a random seed used by the HARQ process may be updated when a quantity of retransmissions of a transport block in the process is greater than or equal to a preset threshold corresponding to the process. For example, when a quantity of retransmissions of a transport block in the HARQ process #1 is greater than or equal to N₁, the terminal and the base station may update the random seed based on an initialized random bit. For another example, when a quantity of retransmissions of a transport block in the HARQ process #2 is greater than or equal to N₂, the terminal and the base station may update the random seed based on an initialized random bit. For another example, when a quantity of retransmissions of a transport block in the HARQ process #N is greater than or equal to N_{N}, the terminal and the base station may update the random seed based on an initialized random bit.

It may be understood that N₁, N₂, and N_{N} may be the same or may be different. This is not specifically limited in this application.

It should be noted that, in FIG. 10A and FIG. 10B, a packet transmitted in each HARQ process is merely shown as an example, and does not constitute a limitation on a packet of a MAC PDU transmitted in the HARQ process. In addition, a quantity of HARQ processes may be the same as (as shown in FIG. 10A and FIG. 10B) or different from a quantity of packets of the MAC PDU. FIG. 10A and FIG. 10B are merely examples.

In another possible case, in a multi-HARQ-process scenario, M uplink HARQ processes may be associated with a same security module. M may be a configurable parameter, for example, may be preconfigured or may be indicated by higher layer signaling. This is not specifically limited in this application. An example in which M=2 is used for description, and two uplink HARQ processes are respectively referred to as the i^{th} HARQ process and the (i+1)^{th} HARQ process. The i^{th} HARQ process and the (i+1)^{th} HARQ process may be associated with one security module, for example, are associated with the submodule shown in FIG. 4B for random seed update, or are associated with the submodule shown in FIG. 4A for security processing or security inverse processing.

Similarly, in the multi-HARQ-process scenario, L downlink HARQ processes may be associated with a same security module. L may be a configurable parameter, for example, may be preconfigured or may be indicated by higher layer signaling. This is not specifically limited in this application. It may be understood that M and L may be the same or may be different. An example in which L=2 is used for description, and two downlink HARQ processes are respectively referred to as the i^{th} HARQ process and the (i+1)^{th} HARQ process. The i^{th} HARQ process and the (i+1)^{th} HARQ process may be associated with one security module, for example, are associated with the submodule shown in FIG. 4B to update a random seed, or are associated with the submodule shown in FIG. 4A to perform security processing or security inverse processing.

In this embodiment of this application, to improve system security, security processing may be performed on a part or all of fields of the downlink control information based on the random seed. For example, the downlink control information in S601 may be encrypted based on the random seed t[i,k-1].

In a possible case, an encrypted field in the downlink control information may include HARQ information, time-frequency domain information, encoding information, and the like. Optionally, for example, one or more fields shown in Table 1 are encrypted fields. The base station may encrypt one or more fields shown in Table 1.

**Table 1: Some fields in the downlink control information**

| Field (Item) Field (Item) | Bits (Bits) |
|---|---|
| Frequency domain resource assignment (Frequency domain resource assignment) | Variable (Variable) 7 to 16 |
| Time domain resource assignment (Time domain resource assignment) | 0, 1, 2, 3, 4 |
| Frequency hopping flag (Frequency Hopping Flag) | 0, 1 |
| Modulation and coding scheme (Modulation and coding scheme) | 5 |
| New data indicator (New data indicator) | 1 |
| Redundancy version (Redundancy version) | 2 |
| CBG transmission information (CBG transmission information) | 0, 2, 4, 6, 8 |

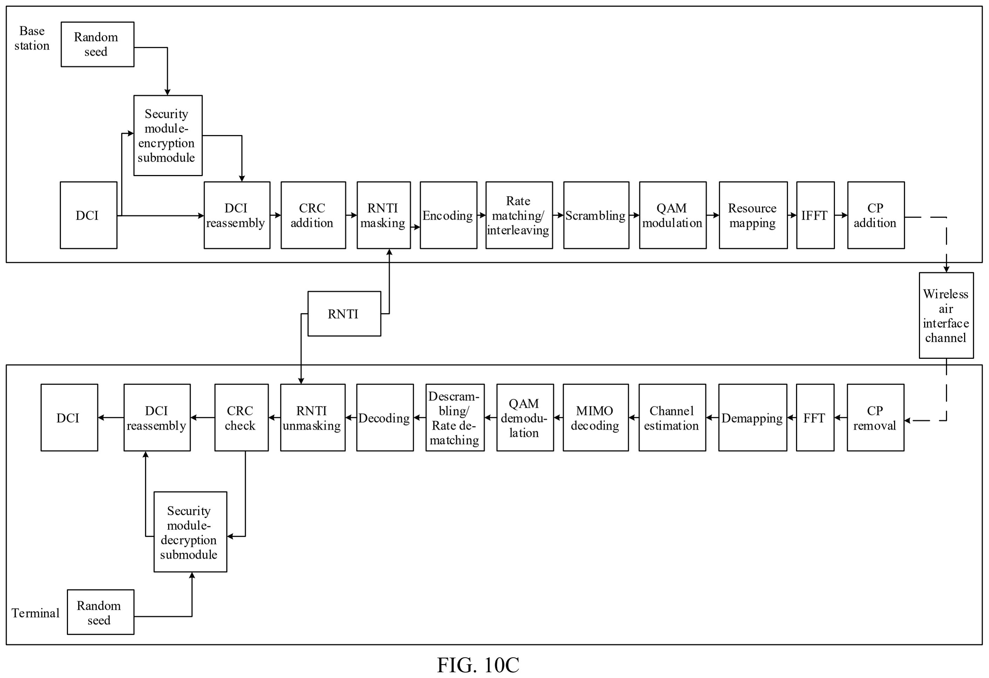

The following describes a procedure of encrypting the downlink control information with reference to FIG. 10C. Refer to FIG. 10C. The base station uses an information block of the to-be-transmitted DCI as a packet information block, and inputs the information block into a security module associated with a HARQ process number carried in the DCI, for example, the encryption submodule shown in FIG. 4A. The encryption submodule may perform an encryption operation on one or more fields shown in Table 1 in the DCI based on a random seed. For example, the base station may encrypt a part or all of fields of the DCI based on a currently valid random seed in the encryption submodule. For example, if the DCI indicates that the scheduled k^{th} piece of data in the i^{th} HARQ process is newly transmitted, the base station may perform encryption based on a current random seed in the encryption submodule, that is, a random seed t[i,k-1].

Optionally, to avoid an increase in blind detection complexity of a PDCCH, the HARQ process number may be kept in a plaintext format and is not encrypted. The base station reassembles, according to a DCI format, information blocks of the DCI by using the field encrypted by the extractor and another unencrypted field. The base station performs subsequent transmitter baseband processing according to a standard protocol, for example, CRC adding, radio network temporary identifier (radio network temporary identity, RNTI) masking, encoding such as polar (polar) encoding, and rate matching, as shown in FIG. 10C.

After blindly detecting a DCI signal and receiving the DCI signal, the terminal may perform receiver baseband processing according to a standard protocol, for example, fast Fourier transform (fast Fourier transform, FFT), resource de-mapping, channel estimation, multiple-input multiple-output (multiple-input multiple-output, MIMO) decoding, and quadrature amplitude modulation (quadrature amplitude modulation, QAM) demodulation, as shown in FIG. 10C.

When the terminal successfully decodes the DCI, that is, when CRC check succeeds, the terminal obtains, by decoding, a HARQ process number carried in the DCI. The terminal may obtain a current valid random seed in a security module associated with a HARQ process corresponding to the HARQ process number. The terminal inputs a ciphertext field in the successfully decoded DCI into a submodule that performs an inverse operation of an operation of the submodule shown in FIG. 4A, and performs decryption based on the current valid random seed. The terminal performs decryption to obtain an encrypted field of the DCI, for example, one or more fields shown in Table 1.

Based on the foregoing solution, the base station may encrypt a part or all of fields of the downlink control information, so that security of the downlink control information can be improved.

The following describes, with reference to the accompanying drawings, a communication apparatus configured to perform the foregoing secure communication method provided in embodiments of this application.

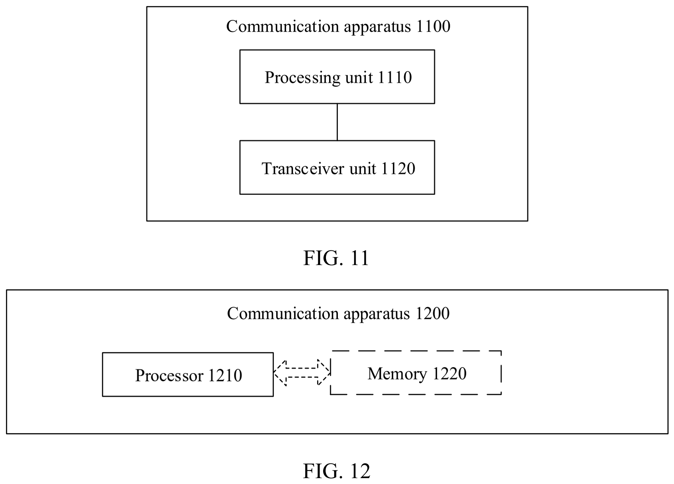

FIG. 11 is a block diagram of a communication apparatus 1100 according to an embodiment of this application. The communication apparatus 1100 may correspondingly implement functions or steps implemented by the terminal device or the network device in the foregoing method embodiments. The communication apparatus may include a processing unit 1110 and a transceiver unit 1120. Optionally, a storage unit may be further included. The storage unit may be configured to store instructions (code or a program) and/or data. The processing unit 1110 and the transceiver unit 1120 may be coupled to the storage unit. For example, the processing unit 1110 may read the instructions (the code or the program) and/or the data in the storage unit, to implement a corresponding method. The foregoing units may be independently disposed, or may be partially or completely integrated.

Optionally, the transceiver unit 1120 may include a sending unit and a receiving unit. The sending unit may be configured to perform all sending operations performed by the communication apparatus 1100, and the receiving unit may be configured to perform all receiving operations performed by the communication apparatus 1100.

In some possible implementations, the communication apparatus 1100 can correspondingly implement behavior and functions of the terminal device and the like in the foregoing method embodiments. For example, the communication apparatus 1100 may be a terminal device, or may be a component (for example, a chip or a circuit) used in the terminal device. The transceiver unit 1120 may be configured to perform all receiving or sending operations performed by the terminal device in the embodiment shown in FIG. 6, for example, S601 in the embodiment shown in FIG. 6, and/or configured to support another process of the technology described in this specification. The processing unit 1110 is configured to perform all operations other than the receiving or sending operations performed by the terminal device in the embodiment shown in FIG. 6, for example, S602 in the embodiment shown in FIG. 6, and/or another process used to support the technology described in this specification.

For example, the transceiver unit 1120 is configured to receive downlink control information, where the downlink control information indicates whether the k^{th} piece of data transmitted in the i^{th} hybrid automatic repeat request HARQ process is newly transmitted, and i identifies a HARQ process number. If the k^{th} piece of data is newly transmitted, the processing unit 1110 is configured to update a random seed. An updated random seed is used for security processing on the k^{th} piece of data.

In some possible implementations, the communication apparatus 1100 can correspondingly implement behavior and functions of the network device in the foregoing method embodiments. For example, the communication apparatus 1100 may be a network device, or may be a component (for example, a chip or a circuit) used in the network device. The transceiver unit 1120 may be configured to perform all receiving or sending operations performed by the network device in the embodiment shown in FIG. 6, for example, S601 in the embodiment shown in FIG. 6, and/or configured to support another process of the technology described in this specification. The processing unit 1110 is configured to perform all operations other than the receiving or sending operations performed by the network device in the embodiment shown in FIG. 6.

For example, the transceiver unit 1120 is configured to receive response information of the (k-1)^{th} piece of data transmitted in the i^{th} hybrid automatic repeat request HARQ process, where the response information indicates that the (k-1)^{th} piece of data is successfully transmitted. Alternatively, the transceiver unit 1120 is configured to receive the (k-1)^{th} piece of data transmitted in the i^{th} HARQ process, and successfully decode the (k-1)^{th} piece of data. The processing unit 1110 is configured to update a random seed. An updated random seed is used for security processing on the k^{th} piece of data transmitted in the i^{th} HARQ process. The transceiver unit 1120 is further configured to send downlink control information, where the downlink control information indicates that the k^{th} piece of data is newly transmitted.

For operations performed by the processing unit 1110 and the transceiver unit 1120, refer to the related descriptions in the foregoing method embodiments.

It should be understood that the processing unit 1110 in this embodiment of this application may be implemented by a processor or a processor-related circuit component, and the transceiver unit 1120 may be implemented by a transceiver, a transceiver-related circuit component, or a communication interface.

Based on a same concept, as shown in FIG. 12, an embodiment of this application provides a communication apparatus 1200. The communication apparatus 1200 includes a processor 1210. Optionally, the communication apparatus 1200 may further include a memory 1220, configured to store instructions executed by the processor 1210, store input data required by the processor 1210 to run the instructions, or store data generated after the processor 1210 runs the instructions. The processor 1210 may implement the method shown in the foregoing method embodiments based on the instructions stored in the memory 1220.

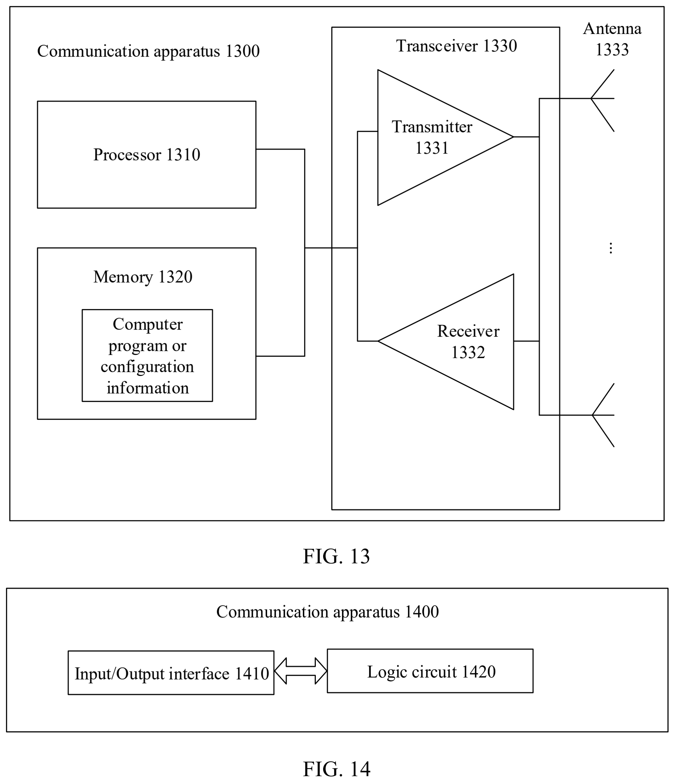

Based on the same concept, as shown in FIG. 13, an embodiment of this application provides a communication apparatus 1300. The communication apparatus 1300 may be a chip or a chip system. Optionally, in this embodiment of this application, the chip system may include a chip, or may include a chip and another discrete device.

The communication apparatus 1300 may include at least one processor 1310. The processor 1310 is coupled to a memory. Optionally, the memory may be located inside the apparatus, or may be located outside the apparatus. For example, the communication apparatus 1300 may further include at least one memory 1320. The memory 1320 stores a computer program, configuration information, a computer program or instructions, and/or data necessary for implementing any one of the foregoing embodiments. The processor 1310 may execute the computer program stored in the memory 1320, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320. A specific connection medium between a transceiver 1330, the processor 1310, and the memory 1320 is not limited in this embodiment of this application.

The communication apparatus 1300 may further include the transceiver 1330, and the communication apparatus 1300 may exchange information with another device through the transceiver 1330. The transceiver 1330 may be a circuit, a bus, a transceiver, or any other apparatus that may be configured to exchange information, or is referred to as a signal transceiver unit. As shown in FIG. 13, the transceiver 1330 includes a transmitter 1331, a receiver 1332, and an antenna 1333. In addition, when the communication apparatus 1300 is a chip-type apparatus or a circuit, the transceiver in the communication apparatus 1300 may alternatively be an input/output circuit and/or a communication interface, and may input data (or receive data) and output data (or send data). The processor is an integrated processor, a microprocessor, or an integrated circuit, and the processor may determine output data based on input data.

In a possible implementation, the communication apparatus 1300 may be used in a terminal device. Specifically, the communication apparatus 1300 may be a terminal device, or may be an apparatus that can support a terminal device in implementing functions of the terminal device in any one of the foregoing embodiments. The memory 1320 stores a necessary computer program, a computer program or instructions, and/or data for implementing functions of the terminal device in any one of the foregoing embodiments. The processor 1310 may execute the computer program stored in the memory 1320, to complete the method performed by the terminal device in any one of the foregoing embodiments.

In a possible implementation, the communication apparatus 1300 may be used in a network device. Specifically, the communication apparatus 1300 may be a network device, or may be an apparatus that can support a network device in implementing functions of the network device in any one of the foregoing embodiments. The memory 1320 stores a necessary computer program, a computer program or instructions, and/or data for implementing functions of the network device in any one of the foregoing embodiments. The processor 1310 may execute the computer program stored in the memory 1320, to complete the method performed by the network device in any one of the foregoing embodiments.

The communication apparatus 1300 provided in this embodiment may be used in the terminal device to implement the method performed by the terminal device, or may be used in the network device to implement the method performed by the network device. Therefore, for technical effects that can be achieved by the communication apparatus 1300, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 14. Based on the foregoing embodiments, an embodiment of this application further provides another communication apparatus 1400, including an input/output interface 1410 and a logic circuit 1420. The input/output interface 1410 is configured to receive code instructions and transmit the code instructions to the logic circuit 1420. The logic circuit 1420 is configured to run the code instructions to perform the method performed by the network device or the terminal device in any one of the foregoing embodiments.

Optionally, the input/output interface 1410 may be an interface on a chip, and the logic circuit 1420 may be one or more processors. Optionally, the one or more processors may be located in the apparatus, or may be located outside the apparatus.

The following describes in detail an operation performed by the communication apparatus used in the terminal device or the network device.

In an optional implementation, the communication apparatus 1400 may be used in the terminal device, to perform the method performed by the terminal device, specifically, for example, the method performed by the terminal device in the embodiment shown in FIG. 6.

For example, the input/output interface 1410 is configured to input downlink control information, where the downlink control information indicates whether k^{th} piece of data transmitted in the i^{th} hybrid automatic repeat request HARQ process is newly transmitted, where i identifies a HARQ process number. If the k^{th} piece of data is newly transmitted, the logic circuit 1420 is configured to update a random seed. An updated random seed is used for security processing on the k^{th} piece of data.

The communication apparatus 1400 provided in this embodiment may be used in the terminal device to complete the method performed by the terminal device. Therefore, for technical effects that can be achieved by the communication apparatus 1400, refer to the foregoing method embodiments. Details are not described herein again.

In an optional implementation, the communication apparatus 1400 may be used in the network device to perform the method performed by the network device, specifically, for example, the method performed by the network device in the embodiment shown in FIG. 6.

For example, the input/output interface 1410 is configured to input response information of the (k-1)^{th} piece of data transmitted in the i^{th} hybrid automatic repeat request HARQ process, where the response information indicates that the (k-1)^{th} piece of data is successfully transmitted. Alternatively, the input/output interface 1410 is configured to input the (k-1)^{th} piece of data transmitted in the i^{th} HARQ process, and successfully decode the (k-1)^{th} piece of data. The logic circuit 1420 is configured to update a random seed. An updated random seed is used for security processing on the k^{th} piece of data transmitted in the i^{th} HARQ process. The input/output interface 1410 is further configured to output downlink control information, where the downlink control information indicates that the k^{th} piece of data is newly transmitted.

The communication apparatus 1400 provided in this embodiment may be used in the network device to complete the method performed by the network device. Therefore, for technical effects that can be achieved by the communication apparatus 1400, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effect that can be achieved, refer to the foregoing method embodiments. Details are not described herein again.

Based on the foregoing embodiments, an embodiment of this application further provides a system. The communication system includes at least one network device and a terminal device.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement the functions of the communication apparatuses in FIG. 11 to FIG. 14, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A secure communication method, comprising:
receiving downlink control information, wherein the downlink control information indicates whether the k^{th} piece of data transmitted in the i^{th} hybrid automatic repeat request HARQ process is newly transmitted, and i identifies a HARQ process number; and
updating the random seed if the k^{th} piece of data is newly transmitted, wherein an updated random seed is used for security processing on the k^{th} piece of data.

2. The method according to claim 1, wherein an identifier of the i^{th} HARQ process is associated with the i^{th} security module, and the i^{th} security module is configured to: update and/or generate the random seed, and perform security processing on the k^{th} piece of data.

3. The method according to claim 1 or 2, wherein the updating the random seed of the i^{th} HARQ process comprises:
obtaining the updated random seed based on the (k-1)^{th} piece of data and a first random seed, wherein the first random seed is used for security processing on the (k-1)^{th} piece of data, and the (k-1)^{th} piece of data is data that is successfully transmitted in the i^{th} HARQ process.

4. The method according to any one of claims 1 to 3, wherein the downlink control information comprises a new data indicator NDI, a toggle in the NDI indicates that the k^{th} piece of data is newly transmitted, and no toggle in the NDI indicates that the k^{th} piece of data is retransmitted.

5. The method according to any one of claims 1 to 4, wherein before the receiving the downlink control information, the method further comprises:
receiving the (k-1)^{th} piece of data transmitted in the i^{th} HARQ process;
performing inverse security processing on the (k-1)^{th} piece of data based on the first random seed, wherein the updated random seed is updated based on the first random seed; and
sending response information of the (k-1)^{th} piece of data, wherein the response information indicates that the (k-1)^{th} piece of data is successfully transmitted.

6. The method according to any one of claims 1 to 4, further comprising:
if the downlink control information indicates that the k^{th} piece of data is newly transmitted, sending the k^{th} piece of security processed data, wherein
security processing is performed on the k^{th} piece of data based on the updated random seed.

7. The method according to any one of claims 1 to 6, further comprising:
when a part or all of fields comprised in the downlink control information are encrypted, decrypting the downlink control information based on the first random seed, wherein the updated random seed is updated based on the first random seed.

8. The method according to claim 7, wherein the HARQ process number of the i^{th} HARQ process comprised in the downlink control information is not encrypted.

9. The method according to any one of claims 1 to 8, wherein the updating the random seed if the k^{th} piece of data is newly transmitted comprises:
if a quantity of retransmissions of a transport block in the i^{th} HARQ process is greater than or equal to a preset threshold, and the k^{th} piece of data is newly transmitted, receiving an initialized random bit; and
updating the random seed based on the initialized random bit, and resetting the quantity of retransmissions to a specified value.

10. The method according to claim 9, wherein the quantity of retransmissions of the transport block in the i^{th} HARQ process comprises a cumulative count of retransmissions for all transport blocks corresponding to the i^{th} HARQ process; or the quantity of retransmissions of the transport block in the i^{th} HARQ process comprises a cumulative count of retransmissions for a specific transport block in the i^{th} HARQ process.

11. A secure communication method, comprising:
receiving response information of the (k-1)^{th} piece of data transmitted in the i^{th} hybrid automatic repeat request HARQ process, wherein the response information indicates that the (k-1)^{th} piece of data is successfully transmitted; or receiving the (k-1)^{th} piece of data transmitted in the i^{th} HARQ process, and successfully decoding the (k-1)^{th} piece of data;
updating the random seed, wherein an updated random seed is used for security processing on the k^{th} piece of data transmitted in the i^{th} HARQ process; and
sending downlink control information, wherein the downlink control information indicates that the k^{th} piece of data is newly transmitted.

12. The method according to claim 11, wherein an identifier of the i^{th} HARQ process is associated with the i^{th} security module, and the i^{th} security module is configured to update and/or generate the random seed, and perform security processing on the k^{th} piece of data.

13. The method according to claim 11 or 12, wherein the updating the random seed of the i^{th} HARQ process comprises:
obtaining the updated random seed based on the (k-1)^{th} piece of data and a first random seed, wherein the first random seed is used for security processing on the (k-1)^{th} piece of data, and the (k-1)^{th} piece of data is data that is successfully transmitted in the i^{th} HARQ process.

14. The method according to any one of claims 11 to 13, wherein the downlink control information comprises a new data indicator NDI, a toggle in the NDI indicates that the k^{th} piece of data is newly transmitted, and no toggle in the NDI indicates that the k^{th} piece of data is retransmitted.

15. The method according to any one of claims 11 to 14, wherein before the receiving the response information of the (k-1)^{th} piece of data transmitted in the i^{th} hybrid automatic repeat request HARQ process, the method further comprises:
performing security processing on the (k-1)^{th} piece of data based on the first random seed, wherein the updated random seed is updated based on the first random seed; and
sending the (k-1)^{th} piece of security processed data.

16. The method according to any one of claims 11 to 14, further comprising:
if the downlink control information indicates that the k^{th} piece of data is newly transmitted, receiving the k^{th} piece of security processed data; and
performing, based on the updated random seed, inverse security processing on the k^{th} piece of security processed data.

17. The method according to any one of claims 11 to 16, further comprising:
when a part or all of fields comprised in the downlink control information are encrypted, decrypting the downlink control information based on the first random seed, wherein the updated random seed is updated based on the first random seed.

18. The method according to claim 17, wherein a HARQ process number of the i^{th} HARQ process comprised in the downlink control information is not encrypted.

19. The method according to any one of claims 11 to 18, wherein the updating the random seed if the k^{th} piece of data is newly transmitted comprises:
if a quantity of retransmissions of a transport block in the i^{th} HARQ process is greater than or equal to a preset threshold, updating the random seed based on the initialized random bit; and
sending the initialized random bit, and resetting the quantity of retransmissions to a specified value.

20. The method according to claim 19, wherein the quantity of retransmissions of the transport block in the i^{th} HARQ process comprises a cumulative count of retransmissions for all transport blocks corresponding to the i^{th} HARQ process; or the quantity of retransmissions of the transport block in the i^{th} HARQ process comprises a cumulative count of retransmissions for a specific transport block in the i^{th} HARQ process.

21. A communication apparatus, comprising a unit configured to perform the method according to any one of claims 1 to 10.

22. A communication apparatus, comprising a unit configured to perform the method according to any one of claims 11 to 20.

23. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 10, or the electronic apparatus is enabled to perform the method according to any one of claims 11 to 20.

24. A communication system, comprising an apparatus configured to perform the method according to any one of claims 1 to 10 and an apparatus configured to perform the method according to any one of claims 11 to 20.

25. A chip system, wherein the chip system comprises:
a communication interface; and
a processor, configured to: invoke and run instructions through the communication interface, to enable a device installed with the chip system to perform the method according to any one of claims 1 to 10, or to enable a device installed with the chip system to perform the method according to any one of claims 11 to 20.
